# EUROPEAN PATENT APPLICATION

(11) **EP 3 854 516 A1**
(43) Date of publication of application: **28.07.2021**
(21) Application number: 20153170.4
(22) Date of filing: 22.01.2020
(51) Int. Cl.: B23K 35/30, B23K 15/00, B23K 26/00, B23K 26/14, B23K 26/342, B33Y 70/00, C22C 1/04, C22C 19/05, C22C 19/07, B23K 35/02, B22F 3/105, B23K 101/00, B23K 103/18

(54) **COMPOSITION FOR MATERIAL FOR LIQUID METAL DEPOSITION OR ADDITIVE MANUFACTURING, POWDER, METHOD AND PRODUCT**

(71) Applicant: Siemens Aktiengesellschaft, 80333 München (DE)
(72) Inventor: Burbaum, Bernd, 14612 Falkensee (DE); Hanebuth, Henning, 85652 Pliening OT Gelting (DE)

(57) **Abstract**

During a mixture of a nickel based super alloy a MCrALY composition and a praise alloy a good composition is found for welding or for additive manufacturing.

## Description

The invention relates to a composition of a nickel based alloy mixture which can be used for welding via especially liquid metal deposition or as a powder bed of an additive manufacturing method.

For a blade tip repair with Laser Metal Deposition (LMD) standard alloys Inconel 625 and Merl 72 are used. The oxidation resistance of both alloys at high temperatures T > 1273K is not better than the base material Alloy247.

Therefore, aim of the invention is to overcome the problem described above.

The problem is solved by a material according to claim 1, a powder according to claim 13, a method according to claim 14 and a product according claim 16.

The invention disclosure deals with the Laser Metal Deposition using powder additive material.

This material mixture can preferably be used for blade tip repair with increased oxidation resistance in comparison to most currently used alloys.

The oxidation resistance of the developed material mixture is better than the base material Alloy247.

A braze material has always a melting point at least 11K, especially at least 20K, and maximum 200K, especially maximum 100K lower than the nickel or cobalt based superalloy.

The powder mixture can be preferably welded using a standard power cladding process or used for any alternative manufacturing process, especially like SLM or SLS.

Preferably additions of a binder or ceramic secondary particles are possible.

A standard heat treatment process for the base nickel based alloy is used for the subsequent brazing process.

The composition of the powder mixture is described as followed in wt%:
a braze: 5% - 15%,
a NiCoCrAlY: 80% - 60%,
a Nickel based superalloy: 10% - 30%,
especially Alloy 247, wherein the melting point of the braze is at least 11K, especially 20K, and maximum 200K, especially maximum 100K lower than the melting point of the nickel or cobalt based superalloy.

As melting point the solidus temperature or liquidus temperature can be choosen, but in the same manner for all constituents.

The mixture comprises, especially consists of 3 powders with different compositions.

The advantages are
- High oxidation resistant material made from standard powder alloys
- Standard welding process "powder cladding" can be used for blade tip build up welding

The metallic powder mixture comprises the nickel (Ni) base superalloy comprises(in wt%):
especially consists of (in wt%):

| | | | |
|---|---|---|---|
| Carbon (C) | 0.05% | - | 0.20% |
| especially | 0.07% | - | 0.17% |
| Chromium (Cr) | 8.0% | - | 23.0% |
| especially | 12.0% | - | 23.0% |
| Cobalt (Co) | 8.0% | - | 19.0% |
| especially | 9.0% | - | 10.0% |
| very especially | 18.0% | - | 19.0% |
| Tungsten (W) | 2.0% | - | 10.0% |
| especially | 2.0% | - | 4.5% |
| very especially | 9.0% | - | 10.0% |
| Titanium (Ti) | 0.6% | - | 5.0% |
| Aluminum (Al) | 1.0% | - | 6.0% |
| optionally | | | |
| Boron (B) | 0.005% | - | 0.03% |
| especially | 0.006% | - | 0.015% |
| Molybdenum (Mo) | 0.0% | - | 4.5% |
| especially | 0.50% | - | 4.0% |
| Tantalum (Ta) | 0.0% | - | 4.5% |
| especially | 1.0% | - | 4.5% |
| Hafnium (Hf) | 0.6% | - | 1.5% |
| Zirconium (Zr) | 0.02% | - | 0.12% |
| Niobium (Nb) | 0.5% | - | 1.0% |

especially no Yttrium (Y) and/or
no Rhenium (Re),
remainder Nickel (Ni),
especially
the nickel (Ni) base superalloy comprises,
especially consists of (in wt%):

| | |
|---|---|
| Nickel (Ni) | 61.6% |
| Carbon (C) | 0.08% |
| Chromium (Cr) | 8.25% |
| Cobalt (Co) | 9.25% |
| Molybdenum (Mo) | 0.50% |
| Tungsten (W) | 9.50% |
| Titanium (Ti) | 0.75% |
| Aluminum (Al) | 5.55% |
| Boron (B) | 0.02% |
| Tantalum (Ta) | 3.20% |
| Hafnium (Hf) | 1.30%, |

especially no Yttrium (Y) and/or
no Rhenium (Re).

Preferably the nickel based super alloy is selected from alloy247, Inconel625, Rene 80 and/or Merl72, especially alloy247.

Inconel 625 comprises (in wt%):

| | |
|---|---|
| C | 0.03-0.10% |
| Si | ≤ 0.5% |
| Mn | ≤ 0.5% |
| P | ≤ 0.020% |
| S | ≤ 0.015% |
| Ti | ≤ 0.40% |
| Cr | 20.0-23.0% |
| Mo | ≤ 8.0-10.0% |
| Ni | ≥ 58.0% |
| Cu | ≤ 0.5% |
| Nb | 3.15-4.15% |
| Al | ≤ 0.4% |
| Fe | ≤ 5.0% |
| Co | ≤ 1.0%. |

René 80 comprises (in wt%):

| | |
|---|---|
| Ni | = 60.0% |
| Cr | = 14.0% |
| Co | = 9.5% |
| Ti | = 5.0% |
| Mo | = 4.0% |
| W | = 4.0% |
| Al | = 3.0% |
| C | = 0.17% |
| B | = 0.015% |
| Zr | = 0.03%. |

Merl 72 comprises (in wt%):
47% Co
20% Cr
15% Ni
9.0% W
4.4% Al
3.0% Ta
1.1% Hf
0.35% C
0.2% Ti
0.04% Y.

The braze alloy comprises preferably,
especially consists of (in wt%):

| | | | |
|---|---|---|---|
| Nickel (Ni) | 51.70% | - | 52.40% |
| Chromium (Cr) | 14.00% | - | 14.25% |
| Cobalt (Co) | 19.00% | - | 19.60% |
| Aluminum (Al) | 8.00% | - | 8.30% |
| Tantalum (Ta) | 0.55% | - | 0.75% |
| Molybdenum (Mo) | 0.09% | - | 0.12% |
| Hafnium (Hf) | 0.22% | - | 0.30% |
| Tungsten (W) | 1.60% | - | 2.20% |
| Titanium (Ti) | 0.70% | - | 1.10% |
| Yttrium (Y) | 0.18% | - | 0.22% |
| Rhenium (Re) | 0.90% | - | 1.10% |
| Carbon (C) | 0.10% | - | 0.20% |
| Zirconium (Zr) | 0.90% | - | 1.80%. |

Especially the braze alloy comprises,
especially consists of (in wt%):

| | |
|---|---|
| Nickel (Ni) | 52.00% |
| Chromium (Cr) | 14.00% |
| Cobalt (Co) | 19.30% |
| Aluminum (Al) | 8.10% |
| Tantalum (Ta) | 0.65% |
| Molybdenum (Mo) | 0.10% |
| Hafnium (Hf) | 0.25% |
| Tungsten (W) | 1.90% |
| Titanium (Ti) | 0.90% |
| Yttrium (Y) | 0.21% |
| Rhenium (Re) | 1.05% |
| Carbon (C) | 0.20% |
| Zirconium (Zr) | 1.35%. |

The melt depressant Zirconium (Zr) in the braze alloy is at least partially replaced by or it is additionally added: Silicon (Si) and/or Magnesium (Mg) and/or Mangan (Mn).

NiCoCrAlY alloy means also optionally NiCoCrAlY-X wherein X = Tantal (Ta), Silicon (Si), Rhenium (Re) and/or Iron (Fe), especially consists of these elements.

The NiCoCrAlY composition preferably comprises (in wt%):
20% - 22% Chromium (Cr),
10.5% - 11.5% Aluminum (Al),
0.3% - 0.5% Yttrium (Y),
1.5% - 2.5% Rhenium (Re) or
between 0.5% - 1.5% Rhenium and
11% - 13% Cobalt (Co) and
a remainder Nickel (Ni).

Further preferably example for NiCoCrAlY composition comprises (in wt%) 15% - 21% Chromium (Cr),
24% - 26% Cobalt (Co),
9.0% - 11.5% Aluminum (Al),
0.05% - 0.7% Yttrium (Y),
0.5% - 2.0% Rhenium (Re) and
a remainder Nickel.

Further example of a NiCoCrAlY composition comprises (in wt%) :
22% - 24% Cobalt (Co),
14% - 16% Chromium (Cr),
10.5% - 11.5% Aluminum (Al),
0.2% - 0.4% Yttrium (Y),
optional 0.3% - 0.9% Tantalum (Ta),
remainder Nickel (Ni).

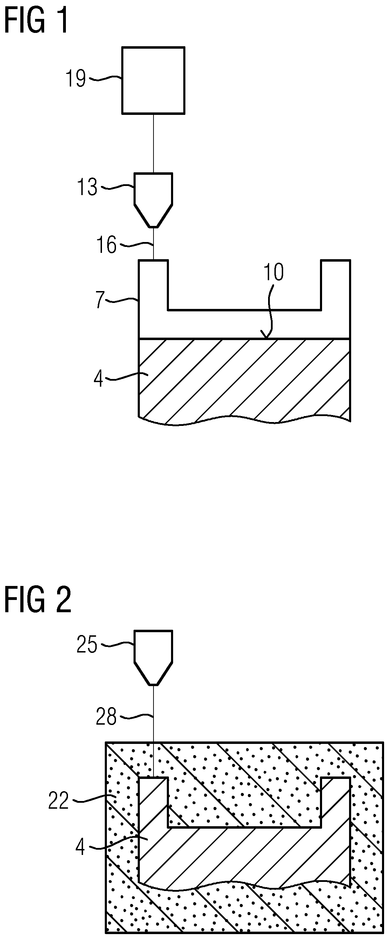

Figure 1 shows a method how to apply the inventive material during welding and figure 2 shows a schematic arrangement to use the inventive powder for additive manufacturing, especially via laser.

The description and the figures are only examples of the invention.

This method and the material can be used to build up totally new component starting on a base plate or to repair an existing substrate 4 which both means a build up of material.

The build up of material is necessary to erosion or cracks which have been removed. In this case, only for example, a blade tip is repaired by building up the material onto a blade tip 7. The surface 10 of the substrate 4 reveals the base on which the material is applied on. The material 16 is applied via a nozzle 13 which is connected to a powder supply 19 is an inventive material. The nozzle 13 also includes a laser which together with the powder 16 is used for welding by melting the powder via a laser beam (not shown).

The inventive material can also be produced as a rod and or a wire and can be used via wire welding.

In figure 2 another application of the inventive material is shown.
Here a selective laser melting process (also electron beams can be used instead of a laser) wherein a powder bed 22 with the inventive powder mixture is used to create a totally new component or even to repair a substrate 4.

The substrate 4 is totally inside the powder bed 22 and a laser 25 with a laser beam 28 is used to melt or to sinter partially a powder where a material build up onto the substrate 4 where it is needed or wanted.

The inventive material is a metallic powder mixture of three different powders.
Especially the powder mixture comprises alloy 247 or generally a nickel based super alloy and a NiCoCrAlY, and also comprises optionally additions like Rhenium (Re), Tantalum (Ta) and/or Silicon (Si), and a braze alloy which has at least a melting point at least 20K lower than the nickel based super alloy.

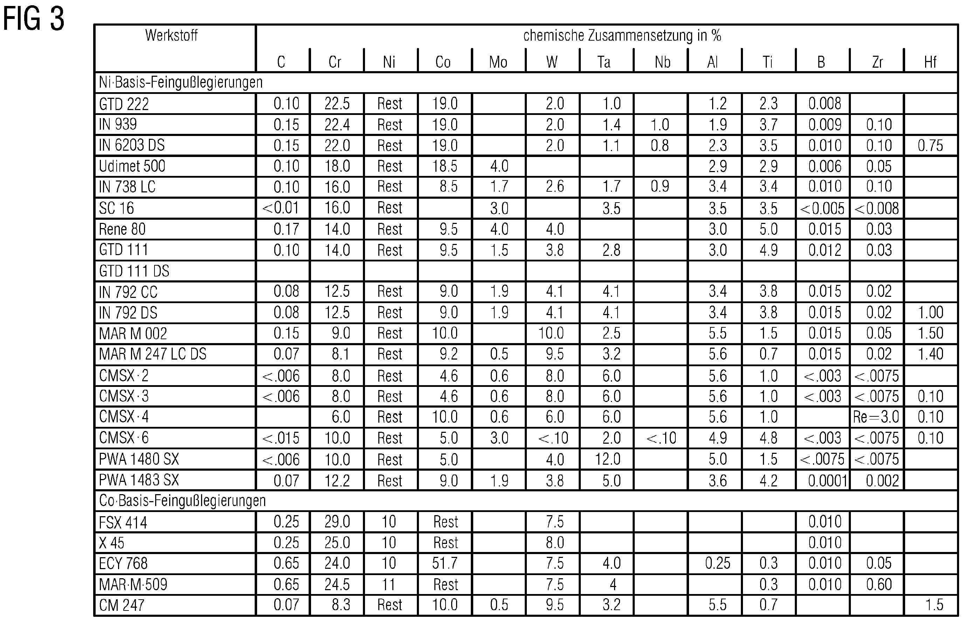

Further examples for the nickel base super alloy are listed in figure 3.

## Claims

1. Metallic powder mixture,
especially usable for build up via liquid metal deposition or any additive manufacturing method,
comprising,
especially consisting of (in wt%):
a cobalt (Co) or nickel (Ni) based super alloy
with a content of 10% to 30%,
especially 20%,
a NiCoCrAlY-X-composition
with a content of 80% to 60% and
especially 70%,
wherein X = Silicon (Si), Tantalum (Ta), Rhenium (Re) and/or Iron (Fe),
a metallic braze material
with a content between 5% to 15%,
especially 10%,
wherein the melting point of the braze material is at least 11K, especially at least 20K, and maximum 200K, especially maximum 100K lower than the melting point of the cobalt (Co) or nickel (Ni) based superalloy,
especially the powder mixture consists of three powders with different compositions.

2. Metallic powder mixture according to claim 1, wherein the nickel (Ni) base superalloy comprises, especially consists of (in wt%):
| | | | |
|---|---|---|---|
| Carbon (C) | 0.05% | - | 0.20% |
| especially | 0.07% | - | 0.17% |
| Chromium (Cr) | 8.0% | - | 23.0% |
| especially | 12.0% | - | 23.0% |
| Cobalt (Co) | 8.0% | - | 19.0% |
| especially | 9.0% | - | 10.0% |
| very especially | 18.0% | - | 19.0% |
| Tungsten (W) | 2.0% | - | 10.0% |
| especially | 2.0% | - | 4.5% |
| very especially | 9.0% | - | 10.0% |
| Titanium (Ti) | 0.6% | - | 5.0% |
| Aluminum (Al) | 1.0% | - | 6.0% |
| optionally | | | |
| Boron (B) | 0.005% | - | 0.03% |
| especially | 0.006% | - | 0.015% |
| Molybdenum (Mo) | 0.0% | - | 4.5% |
| especially | 0.50% | - | 4.0% |
| Tantalum (Ta) | 0.0% | - | 4.5% |
| especially | 1.0% | - | 4.5% |
| Hafnium (Hf) | 0.6% | - | 1.5% |
| Zirconium (Zr) | 0.02% | - | 0.12% |
| Niobium (Nb) | 0.5% | - | 1.0% |
especially no Yttrium (Y) and/or
no Rhenium (Re),
remainder Nickel (Ni).

3. Metallic powder mixture according to one or both of the claims 1 or 2,
wherein the nickel (Ni) base superalloy comprises, especially consists of (in wt%):
| | |
|---|---|
| Nickel (Ni) | 61.6% |
| Carbon (C) | 0.08% |
| Chromium (Cr) | 8.25% |
| Cobalt (Co) | 9.25% |
| Molybdenum (Mo) | 0.50% |
| Tungsten (W) | 9.50% |
| Titanium (Ti) | 0.75% |
| Aluminum (Al) | 5.55% |
| Boron (B) | 0.02% |
| Tantalum (Ta) | 3.20% |
| Hafnium (Hf) | 1.30%, |
especially no Yttrium (Y) and/or
no Rhenium (Re).

4. Mixture according to any of the claims 1 or 2, wherein the nickel based super alloy is selected from Alloy247, Inconel625, Rene 80 or Merl72, especially Alloy247.

5. Metallic powder mixture according to any of the claims 1 to 4,
wherein the braze alloy comprises,
especially consists of (in wt%):
| | | | |
|---|---|---|---|
| Nickel (Ni) | 51.70% | - | 52.40% |
| Chromium (Cr) | 14.00% | - | 14.25% |
| Cobalt (Co) | 19.00% | - | 19.60% |
| Aluminum (Al) | 8.00% | - | 8.30% |
| Tantalum (Ta) | 0.55% | - | 0.75% |
| Molybdenum (Mo) | 0.09% | - | 0.12% |
| Hafnium (Hf) | 0.22% | - | 0.30% |
| Tungsten (W) | 1.60% | - | 2.20% |
| Titanium (Ti) | 0.70% | - | 1.10% |
| Yttrium (Y) | 0.18% | - | 0.22% |
| Rhenium (Re) | 0.90% | - | 1.10% |
| Carbon (C) | 0.10% | - | 0.20% |
| Zirconium (Zr) | 0.90% | - | 1.80%. |

6. Metallic powder mixture according to any of the claims 1 to 5,
wherein the braze alloy comprises,
especially consists of (in wt%):
| | |
|---|---|
| Nickel (Ni) | 52.0% |
| Chromium (Cr) | 14.0% |
| Cobalt (Co) | 19.30% |
| Aluminum (Al) | 8.10% |
| Tantalum (Ta) | 0.65% |
| Molybdenum (Mo) | 0.10% |
| Hafnium (Hf) | 0.25% |
| Tungsten (W) | 1.90% |
| Titanium (Ti) | 0.90% |
| Yttrium (Y) | 0.20% |
| Rhenium (Re) | 1.05% |
| Carbon (C) | 0.20% |
| Zirconium (Zr) | 1.35%. |

7. Metallic powder mixture according to any of the claims 5 or 6,
wherein the melt depressant Zirconium (Zr) is at least partially replaced by or it is additionally added: Silicon (Si) and/or Magnesium (Mg) and/or Mangan (Mn).

8. Metallic mixture according to any of the
claims 1, 2, 3, 4, 5, 6 or 7,
wherein the NiCoCrAlY-X composition comprises,
especially consists of(in wt%):
14.0% - 22.0% Chromium (Cr)
9.0% - 11.5% Aluminum (Al)
0.3% - 0.5% Yttrium (Y)
11.0% - 26.0% Cobalt (Co)
0.0% - 1.0% Silicon (Si),
especially 0.1% - 1.0 % Silicon (Si),
0.0% - 2.5% Rhenium (Re)
and remainder Nickel (Ni).

9. Mixture according to any of the claims 1 to 7,
wherein the NiCoCrAlY-X composition comprises,
especially consists of (in wt%):
20.0% - 22.0% Chromium (Cr)
10.5% - 11.5% Aluminum (Al)
0.3% - 0.5% Yttrium (Y)
1.5% - 2.5% Rhenium (Re) or between 0.5% - 1.5% Rhenium
11.0% - 13.0% Cobalt (Co) and
remainder Nickel.

10. Mixture according to any of the claims 1 to 7,
wherein the NiCoCrAlY-X composition comprises,
especially consists of (in wt%):
15.0% - 21.0% Chromium (Cr)
24.0% - 26.0% Cobalt (Co)
9.0% - 11.5% Aluminum (Al)
0.05% - 0.7% Yttrium (Y)
0.5% - 2.0% Rhenium (Re) and
remainder Nickel.

11. Mixture according to any of the claims 1 to 7,
wherein the NiCoCrAlY-X composition comprises,
especially consists of (in wt%):
22.0% - 24.0% Cobalt (Co)
14.0% - 16.0% Chromium (Cr)
10.5% - 11.5% Aluminum (Al)
0.2% - 0.4% Yttrium (Y),
optional 0.3% - 0.9% Tantalum (Ta) and
remainder Nickel (Ni).

12. Mixture according to any of the claims 1 to 7,
wherein NiCoCrAlY-X comprises,
especially consists of
Nickel (Ni), Cobalt (Co), Chromium (Cr), Aluminum (Al), Yttrium (Y) or any other Rare Earth Metal,
especially only Yttrium (Y) and
optional X selected from the group Tantalum (Ta), Rhenium (Re), Silicon (Si) and/or Iron (Fe).

13. Mixture according to any of the preceding claims,
wherein the braze alloy comprises,
especially consist of (in wt%)
Nickel (Ni) 74%
Chromium (Cr) 5%
Titanium (Ti) 7.5%
Zirconium (Zr) 13.5%.

14. Powder,
comprising, especially consisting of a mixture according to any of the claims 1 to 13,
especially with a binder.

15. Method to build up metallic material,
wherein a metallic powder mixture of any of the claims 1 to 13 or a powder of claim 14 is used.

16. Method according to claim 15,
used for welding using powder cladding, wire welding or for additive manufacturing using powder beds,
especially SLM, SLS.

17. Product
produced by a method according to claim 15 or 16 or comprising a metallic powder mixture to any claims 1 to 12 or a powder according to claim 13.
